# EUROPÄISCHE PATENTSCHRIFT

(11) **EP 3 559 067 B1**
(45) Veröffentlichungstag und Bekanntmachung des Hinweises auf die Patenterteilung: **11.05.2022**
(21) Anmeldenummer: 16822985.4
(22) Anmeldetag: 20.12.2016
(51) Int. Cl.: C08G 18/48, C08G 18/71, C08G 18/76, C08G 18/10, C08G 18/22, C08G 18/24, C08L 83/04, C08G 77/00

(54) **VERFAHREN ZUR HERSTELLUNG VON ORGANYLOXYSILYLTERMINIERTEN POLYMEREN**
METHOD FOR PRODUCING ORGANYLOXYSILYL-TERMINATED POLYMERS
PROCÉDÉ POUR LA PRÉPARATION DE POLYMÈRES TERMINÉS PAR ORGANYLOXYSILYLE

(43) Veröffentlichungstag der Anmeldung: 30.10.2019
(73) Patentinhaber: Wacker Chemie AG, 81737 München (DE)
(72) Erfinder: STANJEK, Volker, 84539 Ampfing (DE); BACHMEIER, Bernd-Josef, 84533 Haiming (DE); ZANDER, Lars, 84503 Altötting (DE)
(74) Vertreter: Budczinski, Angelika
(86) Internationale Anmeldenummer: PCT/EP2016/082032
(87) Internationale Veröffentlichungsnummer: WO 2018/113937

(56) Entgegenhaltungen:
- EP-A1- 1 535 940
- EP-A1- 2 636 692
- WO-A2-2011/072056
- DE-A1-102007 037 641

## Beschreibung

Die Erfindung betrifft ein Verfahren zur Herstellung von organyloxysilylterminierten Polymeren sowie Metallchelatkomplex enthaltende Polymerzusammensetzungen und deren Verwendung.

Feuchtigkeitsvernetzbare Zubereitungen auf Basis von silylfunktionalisierten Polymeren sind allgemein bekannt und finden insbesondere als Dichtstoffe, Klebstoffe und/oder als Beschichtungen Verwendung. Eine besonders wichtige Gruppe innerhalb dieser Gruppe stellen Polymere mit terminalen oder lateralen Alkoxysilylgruppen dar, da diese bei der Vernetzungsreaktion lediglich nicht korrosive und angesichts der geringen Mengen auch toxikologisch unbedenkliche Alkohole freisetzen.

In Gegenwart von Luftfeuchtigkeit können die alkoxysilylfunktionalisierten Polymere bereits bei Raumtemperatur in einer zweistufigen Reaktion bestehend aus Hydrolyse und nachfolgender Kondensation miteinander reagieren, was zu einer Aushärtung der entsprechenden Masse führt. Allerdings ist es in der Regel notwendig, diese Härtungsreaktionen durch den Zusatz eines Katalysators zu beschleunigen. Typische Katalysatoren sind dabei u.a. Metallverbindungen, insbesondere lewissaure Metallverbindungen.

Die alkoxysilylfunktionalisierten Polymere werden nach bekannten Methoden hergestellt. Ein gängiges Verfahren ist dabei die Umsetzung von Polymeren, die Endgruppen mit aktivem Wasserstoff besitzen, mit Isocyanatoalkyl-alkoxysilanen. Die Reaktion wird in der Regel in Gegenwart von Katalysatoren durchgeführt. In EP-A 931 800 wird die Herstellung alkoxysilylfunktioneller Polyurethane aus hydroxyfunktionellen Polyurethanpolymeren und z.B. Isocyanatopropyltrimethoxysilan unter wasserfreien Bedingungen und bevorzugt unter einer Inertgasatmosphäre beschrieben, um eine vorzeitige Hydrolyse der Alkoxysilangruppen zu verhindern. Als Katalysatoren werden dabei vorzugsweise zinnhaltige Verbindungen wie Dibutylzinndilaurat, Zinnoctoat oder Zinnacetat eingesetzt.

In EP-A 1 535 940 wird ein Verfahren zur Herstellung von silanterminierten Polyethern beschrieben, bei dem langkettige hydroxyfunktionelle Polyetherpolyole mit Isocyanatoalkyl-alkoxysilanen umgesetzt werden, wobei die Reaktion in Gegenwart von Katalysatoren erfolgt, die aus Bismut- und Zinkverbindungen, wie beispielsweise Bismutneodecanoat oder Zink-2-ethylhexanoat, bestehend.

Weitere Katalysatoren für die Herstellung von silanterminierten Polymeren aus hydroxyfunktionellen Polymeren und Isocyanatoalkyl-alkoxysilanen werden in WO 2009/133061 sowie WO 2009/133062 beschrieben. Dort kommen Katalysatoren, ausgewählt aus der Gruppe bestehend aus Kalium-, Eisen-, Indium-, Zink-, Bismut- und Kupferverbindungen zum Einsatz, beispielsweise Kaliumneodecanoat, Indiumneooctoat, Kupfernaphtenat oder Eisennaphthenat.

Ein weiteres Verfahren zur Herstellung von alkoxysilylfunktionalisierten Polymeren sieht eine sequentielle oder auch gleichzeitige Umsetzung von drei Komponenten vor. Bei der ersten Komponente handelt es sich um ein hydroxyfunktionelles Polymer, typischerweise ein hydroxyfunktioneller Polyester oder Polyester. Die zweite Komponente besteht aus Isocyanaten mit mindestens zwei Isocyanatgruppen pro Molekül, die bezogen auf die erste Komponente im Überschuss eingesetzt wird. Bei der dritten Komponente schließlich handelt es sich um ein Aminoalkyl-alkoxysilan. Bei diesem Verfahren wird ein sogenanntes alkoxysilylterminiertes Polyurethan erhalten.

Auch dieser Herstellungsweg ist vielfach beschrieben, z.B. in EP-A 2 470 599 oder auch WO 2013/079330. Auch hier wird insbesondere zur Beschleunigung der Reaktion der Isocyanatgruppen der o.g. zweiten Komponente mit den Hydroxylgruppen der ersten Komponente oftmals ein metallhaltiger Katalysator eingesetzt. So wird in den Beispielen von EP-A 2 470 599 Dibutylzinndilaurat verwendet, während in WO 2013/079330 ein bismuthaltiger Katalysator (Borchi^{®} Kat 0244) zum Einsatz kommt.

Nachteilig an all diesen Verfahren ist die Tatsache, dass der jeweils eingesetzte Katalysator im Endprodukt verbleibt. Dies kann zu einer Vielzahl an Problemen führen. So sind die Metallkatalysatoren, die bei der Polymerherstellung zur Beschleunigung der Urethanbildung aus Hydroxy- und Isocyanatfunktion dienen, in der Regel ebenfalls in der Lage, die Hydrolyse und Kondensation der Alkoxysilylgruppen zu katalysieren. Das gilt insbesondere für sämtliche Zinn- und Organozinnverbindungen, die gängige Härtungskatalysatoren für alkoxysilylterminierte Polymere darstellen. Aber auch nahezu alle anderen metallhaltigen Katalysatoren, die bei der Herstellung der silylterminierten Polymere zum Einsatz kommen, besitzen die Fähigkeit, auch die Härtungsreaktion ebendieser Polymere zumindest in gewissem Umfang zu beschleunigen.

Dies führt zu einer verringerten Stabilität dieser Polymere gegenüber Luftfeuchtigkeit. Denn auch wenn das fertig formulierte Endprodukt, d.h. der anwendungsfertige Klebstoff, Dichtstoff oder die ausformulierte Beschichtung, selbstverständlich eine hinreichende Reaktivität gegenüber Luftfeuchtigkeit und damit eine anwendungsfreundliche Härtungsgeschwindigkeit aufweisen muss, so ist diese Reaktivität gegenüber Luftfeuchtigkeit im reinen, noch nicht fertig formulierten Polymer natürlich ausgesprochen unerwünscht. So erschwert sie nicht nur dessen Handhabung, sondern verringert auch dessen Lagerfähigkeit, solange es nicht gelingt, jeglichen Kontakt mit (Luft)-Feuchtigkeit auszuschließen, was aber nur mit erheblichem und damit auch kostenintensivem Aufwand möglich ist.

Ein anderes Problem kann sich ergeben, wenn bei der Herstellung der silylterminierten Polymere Katalysatoren mit vergleichsweise edlen Metallen eingesetzt werden, z.B. Indium-, Bismut- oder Kupferkatalysatoren. In diesem Fall kann es in Gegenwart reduzierend wirkender Verbindungen zu einer Reduktion des Metallkatalysators kommen, bei der das elementare Metall entsteht, das dann meist in Form eines schwarzen kolloidalen Feststoffes anfällt und zu starken Verfärbungen führt.

Die reduzierend wirkenden Substanzen können dabei unabsichtlich, beispielsweise als Verunreinigung von anderen Komponenten einer Kleb- oder Dichtstoffformulierung, oder auch gezielt, beispielsweise als Antioxidantien, zugegeben worden sein. Das Ergebnis, die auffällige Grau- oder sogar Schwarzfärbung, ist jedoch in jedem Falle unerwünscht.

Schließlich können sich die Metallkatalysatoren auch noch negativ auf die Stabilität anderer Formulierungsbestandteile auswirken, mit denen das silylterminierte Polymer bei der Herstellung des jeweiligen Endproduktes, d.h. des letztendlich erwünschten Kleb-, Dicht- oder Beschichtungsmittels, kompoundiert wird. Hier sind insbesondere Zinn- sowie Eisenkatalysatoren kritisch, die z.B. als Weichmacher eingesetzte Ester spalten können.

Gleichzeitig kann bei der Herstellung der silylterminerten Polymere über eine Urethanreaktion aber auch nicht auf den Einsatz von metallhaltigen Katalysatoren verzichtet werden, da die Reaktionszeiten ansonsten zu lang und das entsprechende Herstellverfahren damit unrentabel wäre. Eine Abtrennung der Metallkatalysatoren aus dem fertigen silanterminierten Prepolymer ist mit wirtschaftlich sinnvollen Maßnahmen ebenfalls nicht durchführbar.

D1 beschäftigt sich mit einem Verfahren zur Herstellung silylierter Polyurethan-Zusammensetzungen, die sich durch eine verbesserte Lagerstabilität auszeichnen.

D3 beschreibt lediglich ein Verfahren zur Stabilisierung von isocyanatfunktionellen Polymeren.

D4 beschreibt eine Stabilisierung von isocyanatfunktionellen Prepolymeren mit Phosphorsäureestern.

Aufgabe der Erfindung war somit ein wirtschaftlich sinnvolles Verfahren zur Herstellung von silylterminerten Polymeren, bei denen das Produkt sowie die aus dem Produkt herstellbaren Formulierungen die oben genannten Nachteile nicht mehr aufweisen.

Gegenstand der Erfindung ist ein Verfahren zur Herstellung von organyloxysilylterminierten Polymeren (A), dadurch gekennzeichnet, dass
in einem ersten Schritt
   mindestens eine hydroxyfunktionelle organische Verbindung mit mindestens einer isocyanatfunktionellen Verbindung sowie gegebenenfalls einem Organyloxygruppen aufweisenden Silan in Anwesenheit von mindestens einem metallhaltigen Katalysator (B) umgesetzt wird und
in einem zweiten Schritt
   die so erhaltene Reaktionsmischung mit Chelatkomplexbildner (C) versetzt wird, der ausgewählt wird aus
(C1) Kronenether,
(C2) Heterocyclus aufweisende Verbindung, deren im Cyclus befindliches Heteroatom über ein freies Elektronenpaar verfügt und die mindestens ein weiteres Heteroatom mit einem freien Elektronenpaar enthält, und
(C3) Verbindung enthaltend mindestens zwei Gruppen pro Molekül, die ausgewählt werden aus Carboxylgruppen, Carboxylatgruppen, Sulfatgruppen, Sulfonatgruppen, Phosphatgruppen, Phosphonatgruppen, Cyanidgruppen und Cyanatgruppen.

Ein weiterer Gegenstand der Erfindung sind Zusammensetzungen enthaltend
(A) organyloxysilylterminierte Polymere, herstellbar durch Umsetzung von mindestens einer hydroxyfunktionellen organischen Verbindung mit mindestens einer isocyanatfunktionellen Verbindung sowie gegebenenfalls einem Organyloxygruppen aufweisenden Silan in Anwesenheit von mindestens einem metallhaltigen Katalysator (B),
   sowie
(U) mindestens ein Umsetzungsprodukt aus Katalysator (B) und Chelatkomplexbildner (C).

Bevorzugt handelt es sich bei den erfindungsgemäß hergestellten organyloxysilylterminierten Polymeren (A) um solche der Formel

Y-[X-NR³-(CR¹₂)_{b}-SiRₐ(OR²)₃₋ₐ]ₓ (I),

wobei
- Y: einen x-wertigen Polymerrest bedeutet,
- R: gleich oder verschieden sein kann und einen einwertigen, gegebenenfalls substituierten, SiC-gebundenen Kohlenwasserstoffrest darstellt,
- R¹: gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
- R²: gleich oder verschieden sein kann und Wasserstoffatom oder einen einwertigen, gegebenenfalls substituierten Kohlenwasserstoffrest darstellt,
- R³: gleich oder verschieden sein kann und Wasserstoffatom, einen einwertigen, gegebenenfalls substituierten Kohlenwasserstoffrest oder eine Gruppe -CH(COOR⁴)-CH₂-COOR⁴ darstellt,
- R⁴: gleich oder verschieden sein kann und einen einwertigen, gegebenenfalls substituierten Kohlenwasserstoffrest darstellt,
- X: eine Gruppe -NH-C(=O)- oder -O-C(=O)- darstellt,
- x: eine ganze Zahl von 1 bis 10, bevorzugt 1, 2 oder 3, besonders bevorzugt 1 oder 2, ist,
- a: gleich oder verschieden sein kann und 0, 1 oder 2, bevorzugt 0 oder 1, ist und
- b: gleich oder verschieden sein kann und eine ganze Zahl von 1 bis 10, bevorzugt 1, 3 oder 4, besonders bevorzugt 1 oder 3, insbesondere 1, ist.

Der Erfindung liegt die überraschende Entdeckung zugrunde, dass Komplexbildner (C) in der Lage ist, den metallhaltigen Katalysator zu deaktivieren (B) und damit die beschriebenen negativen Auswirkungen des aktiven Katalysators im fertigen alkoxysilylterminierten Polymer zu verringern oder sogar vollständig zu beseitigen.

So wurde überraschenderweise gefunden, dass die nach dem erfindungsgemäßen Verfahren hergestellten organyloxygruppenterminierten Polymere (A) im Vergleich zu nicht erfindungsgemäß hergestellten Polymeren eine deutlich verbesserte Stabilität gegenüber Luftfeuchtigkeit aufweisen, was die Handhabung bei der weiteren Verarbeitung erheblich erleichtert.

Ebenso überraschend ist, dass auch eine mögliche Reduktion des Metallkatalysators (B) und die damit verbundene Entstehung von kolloidalen, als schwarzer Niederschlag auftretenden Metallpartikeln durch die Zugabe der Komponente (C) unterbunden werden kann.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest und der Heptafluorisopropylrest, und Halogenarylreste, wie der o-, m- und p-Chlorphenylrest.

Bevorzugt handelt es sich bei Rest R um gegebenenfalls mit Halogenatomen substituierte, einwertige Kohlenwasserstoffreste mit 1 bis 6 Kohlenstoffatomen, besonders bevorzugt um Alkylreste mit 1 oder 2 Kohlenstoffatomen, insbesondere um den Methylrest.

Beispiele für Reste R¹ sind Wasserstoffatom sowie die für R angegebenen Reste.

Bevorzugt handelt es sich bei Rest R¹ um Wasserstoffatom oder Kohlenwasserstoffreste mit 1 bis 20 Kohlenstoffatomen, insbesondere um Wasserstoffatom.

Beispiele für Rest R² sind Wasserstoffatom sowie die für Rest R angegebenen Beispiele.

Bevorzugt handelt es sich bei Rest R² um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- oder Ethylrest.

Beispiele für Rest R³ sind Wasserstoffatom, die für R angegebenen Reste oder eine Gruppe -CH(COOR⁴)-CH₂-COOR⁴.

Bei Rest R³ handelt es sich vorzugsweise um Wasserstoffatom, eine Gruppe -CH(COOR⁴)-CH₂-COOR⁴, einen gegebenenfalls substituierten Kohlenwasserstoffrest mit 1 bis 20 Kohlenstoffatomen, besonders bevorzugt um eine lineare, verzweigte oder cyclische Alkylgruppe mit 1 bis 20 Kohlenstoffatomen, oder um eine gegebenenfalls mit Halogenatomen substituierte Arylgruppe mit 6 bis 20 Kohlenstoffatomen. Sofern es sich bei Rest X um eine Gruppe -O-C(=O)- handelt, steht Rest R³ besonders bevorzugt für ein Wasserstoffatom.

Beispiele für Rest R⁴ sind die für R angegebenen Reste.

Bei den Resten R⁴ handelt es sich vorzugsweise um Alkylgruppen mit 1 bis 10 Kohlenstoffatomen, besonders bevorzugt um Methyl-, Ethyl- oder Propylreste.

Die Reste Y weisen vorzugsweise zahlenmittlere Molmassen Mₙ von mindestens 200 g/mol, besonders bevorzugt von mindestens 500 g/mol, insbesondere von mindestens 1 000 g/mol auf. Die Reste Y weisen vorzugsweise zahlenmittlere Molmassen Mₙ von höchstens 40 000 g/mol, insbesondere von höchstens 25 000 g/mol, insbesondere von höchstens 20 000 g/mol auf.

Die zahlenmittlere Molmasse Mₙ wird dabei im Rahmen der vorliegenden Erfindung mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Beispiele für Polymerrest Y sind organische Polymerreste, deren zahlenmittlere Molekülmasse 200 bis 40 000 g/mol beträgt und die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Kohlenwasserstoffpolymere, wie Polyisobutylen und Copolymere von Polyisobutylen mit Isopren; Polychloroprene; Polyisoprene; Polyurethane; Polyester; Polyamide; Polyacrylate; Polymethacrylate; Vinylpolymer oder Polycarbonate enthalten. Bevorzugt handelt es sich bei dem Polymerrest Y um Polyester-, Polyether-, Polyurethan-, Polyalkylen- oder Polyacrylatreste, besonders bevorzugt um Polyurethanreste, Polyesterreste oder Polyoxyalkylenreste, insbesondere um Polyoxypropylenreste, mit der Maßgabe, dass deren zahlenmittlere Molekülmasse 200 bis 40 000 g/Mol beträgt.

Die Komponente (A) kann dabei die Silangruppen der Formel

-X-NR³-(CR¹₂)_{b}-SiRₐ(OR²)₃₋ₐ (II)

an beliebigen Stellen im Polymer aufweisen, wie etwa kettenständig und/oder endständig, wobei die Reste und Indizes die oben genannte Bedeutung aufweisen.

Bevorzugt handelt es sich bei den Silangruppen der Formel (II) um solche der Formeln

-O-C(=O)-NH-(CR¹₂)_{b}-SiRₐ(OR²)₃₋ₐ (III)

oder

-NH-C(=O)-NR³-(CR¹₂)_{b}-SiRₐ(OR²)₃₋ₐ (IV),

wobei die Reste und Indizes die oben genannte Bedeutung aufweisen.

Besonders bevorzugt handelt es sich bei Rest Y in Formel (I) um Polyesterreste, Polyurethanreste oder Polyoxyalkylenreste, deren zahlenmittlere Molekülmasse 200 bis 40 000 g/Mol beträgt, an welche Gruppen der Formeln (III) oder (IV) endständig angebunden sind.

Insbesondere handelt es sich bei Rest Y in Formel (I) um Polyesterreste, Polyurethanreste oder Polyoxyalkylenreste, deren Polymerkette maximal eine Verzweigungsstelle aufweist, und deren zahlenmittlere Molekülmasse 200 bis 40 000 g/Mol beträgt, an welche 1 bis 3 Gruppen der Formeln (III) oder (IV) endständig angebunden sind.

Ganz besonders bevorzugt handelt es sich bei Rest Y in Formel (I) um lineare Polyesterreste, lineare Polyurethanreste oder lineare Polyoxyalkylenreste, deren zahlenmittlere Molekülmasse 200 bis 40 000 g/Mol beträgt, an welche 1 bis 2 Gruppen der Formeln (III) oder (IV) endständig angebunden sind.

Bei den Polyurethanresten Y handelt es sich bevorzugt um solche, an deren Kettenenden Silangruppen der Formeln (III) oder (IV) gebunden sind. Die Polyurethanreste Y sind dabei vorzugsweise aus linearen oder verzweigten Polyoxyalkylenen, insbesondere aus Polypropylenglycolen, und Di- oder Polyisocyanaten herstellbar.

Bei den Polyesterresten Y handelt es sich vorzugsweise um polymere Reaktionsprodukte aus monomeren Dicarbonsäuren und monomeren Diolen oder aus Hydroxycarbonsäuren oder aber aus cyclischen Lactonen wie z.B. ε-Caprolacton, an deren Kettenenden Silangruppen der Formel (III) gebunden sind.

Bei den Polyoxyalkylenresten Y handelt es sich bevorzugt um lineare oder verzweigte Polyoxyalkylenreste, besonders bevorzugt um Polyoxypropylenreste, an deren Kettenenden Gruppen der Formel (III) gebunden sind. Vorzugsweise sind dabei mindestens 85%, besonders bevorzugt mindestens 90%, insbesondere mindestens 95%, aller Kettenenden an Gruppen der Formel (III) gebunden.

Bei den im erfindungsgemäßen Verfahren eingesetzten hydroxyfunktionellen organischen Verbindungen handelt es sich bevorzugt um Polyole (A1) der Formel

Y-[OH]ₓ (V),

wobei
Y einen x-wertigen Polymerrest bedeutet und
x eine ganze Zahl von 1 bis 10, bevorzugt 1, 2 oder 3, besonders bevorzugt 1 oder 2, ist.

Bei den Polyolen (A1) handelt es sich bevorzugt um Hydroxylgruppen aufweisendes Polyurethan, Hydroxylgruppen aufweisendes Polyester oder Hydroxylgruppen aufweisendes Polyoxyalkylen, insbesondere um Hydroxylgruppen aufweisendes Polyoxypropylen, mit der Maßgabe, dass deren zahlenmittlere Molekülmasse 200 bis 40 000 g/Mol, vorzugsweise 1000 bis 25 000 g/mol, besonders bevorzugt 2 000 bis 20 000 g/mol, beträgt.

Die erfindungsgemäß eingesetzten Polyole (A1) können verzweigt oder unverzweigt sein, vorzugsweise sind sie unverzweigt.

Bei den Polyolen (A1) handelt es sich handelsübliche Produkte bzw. sind sie nach in der Chemie gängigen Verfahren herstellbar. Beispiele für kommerziell verfügbare Polyole, die als Komponente (A1) eingesetzt werden können, sind die Acclaim^{®}-Polymere der Fa. Covestro (D-Leverkusen), wie z.B. Acclaim^{®} 4200, Acclaim^{®} 8200, Acclaim^{®} 12200 oder Acclaim^{®} 18200.

Bei den erfindungsgemäß eingesetzten isocyanatfunktionellen Verbindungen handelt es sich bevorzugt um solche ausgewählt aus isocyanatofunktionellen Silanen (A2) der Formel

OCN-(CR¹₂)_{b}-SiRₐ(OR²)₃₋ₐ (VI),

wobei
- R: gleich oder verschieden sein kann und einen einwertigen, gegebenenfalls substituierten, SiC-gebundenen Kohlenwasserstoffrest darstellt,
- R¹: gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
- R²: gleich oder verschieden sein kann und Wasserstoffatom oder einen einwertigen, gegebenenfalls substituierten Kohlenwasserstoffrest darstellt,
- a: gleich oder verschieden sein kann und 0, 1 oder 2, bevorzugt 0 oder 1, ist und
- b: gleich oder verschieden sein kann und eine ganze Zahl von 1 bis 10, bevorzugt 1, 3 oder 4, besonders bevorzugt 1 oder 3, insbesondere 1, ist, und Di- und/oder Polyisocyanaten (A3).

Beispiele für Silane (A2) der Formel (VI) sind Isocyanatomethyl-dimethylmethoxysilan, 3-Isocyanatopropyl-dimethylmethoxysilan, Isocyanatomethyl-methyldimethoxysilan, 3-Isocyanatopropyl-methyldimethoxysilan, Isocyanatomethyl-trimethoxysilan und 3-Isocyanatopropyl-trimethoxysilan, wobei Isocyanatomethyl-methyldimethoxysilan, 3-Isocyanatopropyl-methyldimethoxysilan, Isocyanatomethyl-trimethoxysilan und 3-Isocyanatopropyl-trimethoxysilan bevorzugt und Isocyanatomethyl-methyldimethoxysilan und 3-Isocyanatopropyl-methyldimethoxysilan besonders bevorzugt sind.

Die erfindungsgemäß eingesetzten Silane der Formel (VI) sind handelsübliche Produkte bzw. können nach Verfahren hergestellt werden wie sie beispielsweise in EP 1937697 oder EP2097426 beschrieben sind.

Beispiele für erfindungsgemäß eingesetzte Diisocyanate (A3) sind Diisocyanatodiphenylmethan (MDI), sowohl in Form von rohem oder technischem MDI als auch in Form reiner 4,4' bzw. 2,4' Isomere oder deren Mischungen, Tolylendiisocyanat (TDI) in Form seiner verschiedenen Regioisomere, insbesondere dem 2,4- und dem 2,6-TDI sowie Mischungen dieser Regioisomere, Diisocyanatonaphthalin (NDI), Isophorondiisocyanat (IPDI) oder auch von Hexamethylendiisocyanat (HDI).

Beispiele für erfindungsgemäß eingesetzte Polyisocyanate (A3) sind polymeres MDI (P-MDI), Triphenylmethantriisocyanat oder aber Trimerisate (Biurethe oder Isocyanurate) der oben genannten Diisocyanate. Es können auch Mischungen verschiedener Di- und/oder Polyisocyanate eingesetzt werden.

Bevorzugt handelt es sich bei Komponente (A3) um die oben genannte Typen und Derivate des Diisocyanatodiphenylmethans (MDI) und Tolylendiisocyanats (TDI), Isophorondiisocyanat (IPDI) oder auch von Hexamethylendiisocyanat (HDI).

Auch bei der Komponente (A3) handelt es sich um handelsübliche Produkte.

Bei den im erfindungsgemäßen Verfahren gegebenenfalls eingesetzten organyloxyfunktionellen Silanen handelt es sich bevorzugt um organyloxyfunktionelle, Aminogruppen aufweisende Silane (A4), besonders bevorzugt um Silane der Formel

HNR³-(CR¹₂)_{b}-SiRₐ(OR²)₃₋ₐ (VII),

wobei
- R: gleich oder verschieden sein kann und einen einwertigen, gegebenenfalls substituierten, SiC-gebundenen Kohlenwasserstoffrest darstellt,
- R¹: gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
- R²: gleich oder verschieden sein kann und Wasserstoffatom oder einen einwertigen, gegebenenfalls substituierten Kohlenwasserstoffrest darstellt,
- R³: gleich oder verschieden sein kann und Wasserstoffatom, einen einwertigen, gegebenenfalls substituierten Kohlenwasserstoffrest oder eine Gruppe -CH(COOR⁴)-CH₂-COOR⁴ darstellt,
- a: gleich oder verschieden sein kann und 0, 1 oder 2, bevorzugt 0 oder 1, ist und
- b: gleich oder verschieden sein kann und eine ganze Zahl von 1 bis 10, bevorzugt 1, 3 oder 4, besonders bevorzugt 1 oder 3, insbesondere 1, ist.

Beispiele für Komponente (A4) der Formel (VII) sind HN[CH(COOR⁴)-CH₂-COOR⁴](CH₂)₃-Si(OCH₃)₃, HN[CH(COOR⁴)-CH₂-COOR⁴](CH₂)₃-Si(OCH₃)₂CH₃, wobei R⁴ eine der oben genannten Bedeutungen aufweist, HN[(CH₂)₃-Si(OCH₃)₃]₂, HN[(CH₂)₃-Si(OC₂H₅)₃]₂, HN[(CH₂)₃-Si(OCH₃)₂CH₃]₂, HN[(CH₂)₃-Si(OC₂H₅)₂CH₃]₂, HN[(CH₂)-Si(OCH₃)₃]₂, HN[(CH₂)-Si(OC₂H₅)₃]₂, HN[(CH₂)-Si(OCH₃)₂CH₃]₂, HN[(CH₂)-Si(OC₂H₅)₂CH₃]₂, cyclo-C₆H₁₁NH(CH₂)₃-Si(OCH₃)₃, cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, cyclo-C₆H₁₁NH(CH₂)-Si(OCH₃)₃, cyclo-C₆H₁₁NH(CH₂)-Si(OC₂H₅)₃, cyclo-C₆H₁₁NH(CH₂)-Si (OCH₃)₂CH₃, cyclo-C₆H₁₁NH(CH₂)-Si (OC₂H₅)₂CH₃, Phenyl-NH (CH₂)₃-Si(OCH₃)₃, Phenyl-NH (CH₂)₃-Si(OC₂H₅)₃, Phenyl-NH(CH₂)₃-Si(OCH₃)₂CH₃, Phenyl-NH(CH₂)₃-Si(OC₂H₅)₂CH₃, Phenyl-NH(CH₂)-Si (OCH₃)₃, Phenyl-NH (CH₂)-Si (OC₂H₅)₃, Phenyl-NH (CH₂)-Si(OCH₃)₂CH₃, Phenyl-NH (CH₂)-Si (OC₂H₅)₂CH₃, Alkyl-NH (CH₂)₃-Si(OCH₃)₃, Alkyl-NH(CH₂)₃-Si(OC₂H₅)₃, Alkyl-NH (CH₂)₃-Si(OCH₃)₂CH₃, Alkyl-NH (CH₂)₃-Si(OC₂H₅)₂CH₃, Alkyl-NH (CH₂)-Si (OCH₃)₃, Alkyl-NH (CH₂)-Si (OC₂H₅)₃, Alkyl-NH (CH₂)-Si (OCH₃)₂CH₃ und Alkyl-NH (CH₂)-Si (OC₂H₅)₂CH₃ sowie deren Teilhydrolysate, bevorzugt um cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, cyclo-C₆H₁₁NH(CH₂)-Si(OCH₃)₃, cyclo-C₆H₁₁NH(CH₂)-Si(OC₂H₅)₃, cyclo-C₆H₁₁NH(CH₂)-Si(OCH₃)₂CH₃, cyclo-C₆H₁₁NH(CH₂)-Si(OC₂H₅)₂CH₃, Phenyl-NH(CH₂)₃-Si(OCH₃)₃, Phenyl-NH(CH₂)₃-Si(OC₂H₅)₃, Phenyl-NH(CH₂)₃-Si(OCH₃)₂CH₃, Phenyl-NH(CH₂)₃-Si(OC₂H₅)₂CH₃, Phenyl-NH(CH₂)-Si(OCH₃)₃, Phenyl-NH(CH₂)-Si (OC₂H₅)₃, Phenyl-NH (CH₂)-Si(OCH₃)₂CH₃, Phenyl-NH(CH₂)-Si (OC₂H₅)₂CH₃ sowie Alkyl-NH(CH₂)₃-Si(OCH₃)₃, Alkyl-NH(CH₂)₃-Si(OC₂H₅)₃, Alkyl-NH(CH₂)₃-Si(OCH₃)₂CH₃, Alkyl-NH(CH₂)₃-Si(OC₂H₅)₂CH₃, Alkyl-NH(CH₂)-Si(OCH₃)₃, Alkyl-NH(CH₂)-Si(OC₂H₅)₃, Alkyl-NH(CH₂)-Si(OCH₃)₂CH₃ oder Alkyl-NH(CH₂)-Si(OC₂H₅)₂CH₃, wobei "Alkyl" vorzugsweise für Ethyl-, n-Propyl-, i-Propyl-, n-Butyl-, i-Butyl-, t-Butyl- oder die verschiedenen Stereoisomere des Pentyl-, Hexyl-, Heptyl- oder Octylrestes steht, besonders bevorzugt um HN[CH(COOR⁴)-CH₂-COOR⁴](CH₂)₃-Si(OCH₃)₃ oder HN[CH(COOR⁴)-CH₂-COOR⁴](CH₂)₃-Si(OCH₃)₂CH₃, wobei R⁴ eine der oben genannten Bedeutungen aufweist.

Bei den Silanen (A4) handelt es sich um handelsübliche Produkte bzw. sind sie nach in der Chemie gängigen Verfahren herstellbar.

Silane (A4) werden bevorzugt dann eingesetzt, wenn es sich bei der isocyanatfunktionellen Verbindungen um Di- und/oder Polyisocyanate (A3) handelt.

Zusätzlich zu den Komponenten (A1), (A2), (A3), (B) und (C) sowie gegebenenfalls (A4) können im erfindungsgemäßen Verfahren noch weitere Komponenten eingesetzt werden, wie beispielsweise isocyanatreaktive Verbindungen (A5), die verschieden sind zu Komponente (A1) und (A4), sowie Verbindungen mit einer Isocyanatgruppe (A6).

Beispiele für gegebenenfalls eingesetzte Komponente (A5) sind Verbindungen mit einer oder mehreren NH-, OH- oder SH-Funktionen, die ebenfalls mit Isocyanatgruppen reagieren können, wie etwa monomere Alkohole mit 1 bis 4 Hydroxylgruppen.

Als gegebenenfalls eingesetzte Komponente (A5) können beispielsweise monomere Alkohole mit einer Hydroxygruppe, wie Methanol, Ethanol oder Butanol, eingesetzt werden, bevorzugt Alkohole mit einer Hydroxygruppe mit mindestens 6 Kohlenstoffatomen, besonders bevorzugt Alkohole mit einer Hydroxygruppe mit mindestens 8 Kohlenstoffatomen, insbesondere mit mindestens 10 Kohlenstoffatomen.

Des Weiteren können als Komponente (A5) auch monomere Alkohole mit 2 bis 4 Hydroxylgruppen, bevorzugt 2 Hydroxylgruppen, eingesetzt werden, wie z.B. Glycol, Propandiol, Glycerin und Pentaerythrit.

Bei den gegebenenfalls eingesetzten weiteren Komponenten (A6) kann es sich um Verbindungen mit einer Isocyanatgruppe handeln, wie z.B. Butylisocyanat, Cyclohexylisocyanat oder Phenylisocyanat.

Bevorzugt werden im erfindungsgemäßen Verfahren weder die Komponente (A5) noch die Komponente (A6) eingesetzt.

Im ersten Schritt des erfindungsgemäßen Verfahrens werden isocyanatfunktionelle Verbindungen in Mengen eingesetzt, dass das molare Verhältnis von sämtlichen Isocyanatgruppen zu sämtlichen Hydroxylresten der Polyole (A1) sowie, sofern vorhanden, NHR³-Gruppen der Silane (A4), bevorzugt 0,75 bis 1,25, besonders bevorzugt 1,0 bis 1,2, ist mit R³ gleich der oben genannten Bedeutung.

Sofern bei dem erfindungsgemäßen Verfahren die Isocyanatkomponente (A2) oder (A3) bzw. die Isocyanatkomponenten (A2) und (A3) im Überschuss eingesetzt werden, wird vorzugsweise nach deren Reaktion mit dem Polyol (A1) sowie gegebenenfalls mit dem Silan (A4), in einem Aufarbeitungsschritt ein Alkohol (L) mit einer Hydroxylgruppe zugegeben, um die überschüssigen Isocyanatgruppen zur Reaktion zu bringen. Die resultierende Produktmischung ist vorzugsweise isocyanatfrei. Bei dem zu diesem Zweck eingesetzten Alkohol (L) kann es sich um die oben für (A5) genannten Alkohole mit einer Hydroxylgruppe handeln, vorzugsweise um ein Monool mit 1 bis 6 Kohlenstoffatomen, besonders bevorzugt um Methanol oder Ethanol. Der Alkohol wird bezogen auf die noch in der Reaktionsmischung vorhandenen Isocyanatgruppen vorzugsweise in einem Verhältnis von 0,9:1 bis 20:1, besonders bevorzugt in einem Verhältnis von 1:1 bis 10:1, insbesondere von 1,1:1 bis 5:1 eingesetzt.

Vorzugsweise werden im erfindungsgemäßen Verfahren über die Komponenten (A1), (A2), (A3), (A4), (B), (C) und Alkohol (L) hinausgehend keine weiteren Komponenten eingesetzt.

Bei dem im erfindungsgemäßen Verfahren eingesetzten metallhaltigen Katalysator (B) kann es sich prinzipiell um beliebige und bisher bekannte metallhaltige Verbindungen handeln, die in der Lage sind, die Urethanbildung aus hydroxyl- und isocyanatfunktionellen Edukten zu beschleunigen.

Vorzugsweise enthalten die erfindungsgemäß eingesetzten Katalysatoren (B) Metallatome (M), die ausgewählt werden aus Lithium-, Kalium-, Titan-, Eisen-, Kupfer-, Indium-, Zink-, Mangan-, Zirkonium-, Zinn- und Bismutatomen, wobei Eisen-, Kupfer-, Zink-, Bismut-, Zinn- oder Indiumatome bevorzugt, und Zinn-, Zink- oder Bismutatome besonders bevorzugt werden.

In einer bevorzugten Ausführung der Erfindung handelt es sich bei den metallhaltigen Katalysatoren (B) um Carboxylate oder um Dicarbonylverbindungen der oben genannten Metallatome (M).

Bei den Dicarbonylverbindungen (B) handelt es sich vorzugsweise um Acetylacetonat, Acetessigsäurealkylester, Dialkylmalonate, Benzoylessigester, Dibenzoylmethan oder Benzoylaceton der oben genannten Metallatome (M), insbesondere um Acetylacetonat der oben genannten Metallatome (M).

Bei den Carboxylaten (B) handelt es sich bevorzugt um die Carboxylate aliphatischer, gesättigter oder auch ungesättigter Monocarbonsäuren mit 4 bis 30 Kohlenstoffatomen der oben genannten Metallatome (M).

Beispiele für Monocarbonsäuren, die den Carboxylaten (B) zugrundeliegen können, sind Arachinsäure, Arachidonsäure, Behensäure, Buttersäure, Caproleinsäure, Caprinsäure, Capronsäure, Caprylsäure, Cerotinsäure, Cetoleinsäure, Clupanodonsäure, Eleostearinsäure, Enanthsäure, Erucasäure, Gadoleinsäure, Gondölsäure, Hiragonsäure, Laurinsäure, Lignozerinsäure, Linderasäure, Linolsäure, Linolensäure, Melissinsäure, Montansäure, Myristinsäure, Myristoleinsäure, Naphtensäure, Neodecansäure, Obtusilinsäure, Neooctansäure, Ölsäure, Palmitinsäure, Palmitolsäure, Parinarsäure, Petroselinsäure, Physetsäure, Punicasäure, Scoliondonsäure, Selacholeinsäure, Stearidonsäure, Stearinsäure, Tricosansäure, Tzuzuinsäure, Vaccensäure oder auch sogenannte Versatic^{®}-Säuren, die dem Fachmann als eine Gruppe von tertiären, stark verzweigten, gesättigten Monocarbonsäuren bekannt sind, wie beispielsweise 2,2-Dimethylpropionsäure, 2,2-Dimethylbuttersäure, 2,2-Dimethylpentansäure, 2,2-Dimethylhexansäure, 2,2-Dimethylheptansäure oder 2,2-Dimethyloctansäure (Neodecansäure).

Bei einer weiteren bevorzugten Ausführung der Erfindung, handelt es sich bei dem metallischen Katalysator (B) um eine Organylmetallverbindung mit mindestens einer Metall-Kohlenstoffverbindung, insbesondere um eine Organylzinnverbindung wie die Dialkylzinndicarboxylate.

Auch Alkoxylate der oben genannten Metallatome (M), insbesondere Titan(IV)alkoxylate können als metallischen Katalysator (B) eingesetzt werden.

Beispiele für die erfindungsgemäß eingesetzten Katalysatoren (B) sind Dibutylzinnoxid, Dibutylzinndiacetat, Dibutylzinndilaurat, Dibutylzinndiacetylacetonat, Dioctylzinndilaurat, Dioctylzinndiacetat, Zinn(II)acetat, Zinn(II)octanoat, Zinn(II)-acetylacetonat, Titan(IV)isopropylat, Kaliumneodecanoat, Indiumneodecanoat, Zirkonium(IV)acetylacetonat, Kupfernaphtenat, Eisen(III)acetylacetonat, Eisennaphtenat, Zinkacetylacetonat, Zink-2-ethylhexanoat, Zink-neodecanoat, Bismuth-(2-ethylhexanoat), Bismuth-neodecanoat,und Bismuth-tetramethylheptandionat.

Beispiele für kommerziell erhältliche Bismuth-Katalysatoren sind Borchi^{®} Kat 22, Borchi^{®} Kat VP 0243, Borchi^{®} Kat VP 0244, Borchi^{®} Kat 315 (OMG-Borchers GmbH, D-Langenfeld), die BICAT^{®}-Typen (The Shepherd Chemical Company, USA) und K-Kat^{®} K-348 (KING INDUSTRIES, INC., USA).

Bevorzugte Beispiele für erfindungsgemäß eingesetzte Katalysatoren (B) sind Dialkylzinnverbindungen, ausgewählt aus Dibutylzinnoxid, Dibutylzinndiacetat, Dibutylzinndilaurat, Dibutylzinndiacetylacetonat, Dioctylzinndilaurat, Dioctylzinndiacetat, Eisen(III)acetylacetonat, Zirkonium(IV)acetylacetonat oder die oben genannten Bismutkatalysatoren.

In dem erfindungsgemäßen ersten Verfahrensschritt werden Katalysatoren (B) in Mengen von bevorzugt 0,0005 bis 0,5 Gewichtsteilen, besonders bevorzugt 0,001 bis 0,1 Gewichtsteilen, insbesondere von 0,005 bis 0,05 Gewichtsteilen jeweils bezogen auf 100 Gewichtsteile des fertigen Polymers (A), eingesetzt.

Die Umsetzung der Edukte im ersten Schritt des erfindungsgemäßen Verfahrens kann nach beliebiger und bisher bekannter Weise erfolgen, wobei die eingesetzten Komponenten durch einfaches Vermischen in Kontakt gebracht werden können.

Der erste Schritt des erfindungsgemäßen Verfahrens wird bei Temperaturen von bevorzugt 0 bis 150°C, besonders bevorzugt bei 30 bis 100°C, durchgeführt. Der erste Schritt des erfindungsgemäßen Verfahrens wird bevorzugt beim Druck der umgebenden Atmosphäre, also etwa 900 bis 1100 hPa, durchgeführt.

Vorzugsweise wird der erste Verfahrensschritt unter Schutzgas, z.B. unter Stickstoff, durchgeführt.

Der erste Verfahrensschritt kann sowohl kontinuierlich als auch diskontinuierlich durchgeführt werden, wobei diskontinuierliche Verfahren beispielsweise in EP-A 0931800 oder EP-A 1535940 und ein kontinuierliches Verfahren in EP-A 1896523 beschrieben wird.

In einer bevorzugten Ausführungsform des erfindungsgemäßen Verfahrens (Variante 1) werden im ersten Schritt Polyole (A1) mit isocyanatofunktionellen Silanen (A2) in Anwesenheit von Katalysator (B) umgesetzt. Nach dieser Variante 1 werden im ersten Schritt bevorzugt keine Komponenten (A3) und (A4) eingesetzt, und es können insbesondere Polymere (A) hergestellt werden mit Silangruppen der Formel (III).

In einer weiteren bevorzugten Ausführungsform des erfindungsgemäßen Verfahrens (Variante 2) werden im ersten Schritt Polyole (A1) mit Di- und/oder Polyisocyanaten (A3) sowie organyloxyfunktionellen, Aminogruppen aufweisenden Silanen (A4) in Anwesenheit von Katalysator (B) umgesetzt. Nach dieser Variante 2 werden im ersten Schritt bevorzugt keine Komponenten (A2) eingesetzt, und es können insbesondere Polymere (A) hergestellt werden mit Silangruppen der Formel (IV).

Die Umsetzung gemäß erfindungsgemäßer Variante 2 kann in einem Arbeitsschritt erfolgen, in dem die Komponenten (A1), (A3) und (A4) sowie gegebenenfalls Komponenten (A5) und (A6) gleichzeitig oder in beliebiger Reihenfolge nacheinander zugegeben und miteinander zur Reaktion gebracht werden. Die Umsetzung kann aber auch in mehreren Arbeitsschritten erfolgen, in denen die einzelnen Komponenten sukzessive in zwei oder separaten Arbeitsschritten miteinander zur Reaktion gebracht werden. Auch hier ist die Reihenfolge, in der die einzelnen Komponenten miteinander zur Reaktion gebracht werden, beliebig.

Bei dem im zweiten Schritt des erfindungsgemäßen Verfahrens zugegebenen Chelatkomplexbildner (C) handelt es sich um einen mehrzähnigen Liganden, der zusammen mit einem Metallion einen Chelatkomplex zu bildet.

Der Begriff Chelatkomplex steht dabei für eine Verbindung, bei der ein mehrzähniger Ligand, d.h. ein Ligand, der über mehrere Heteroatome mit jeweils mindestens einem freien Elektronenpaar verfügt, mindestens zwei Koordinationsstellen bzw. Bindungsstellen eines zentralen Metallatoms bzw. eines zentralen Metallions einnimmt.

Falls es sich bei dem erfindungsgemäß eingesetzten Chelatkomplexbildner (C) um Kronenether (C1) handelt, sind [12]Krone-4, [15]Krone-5, [18]Krone-6, oder [21]Krone-7 bevorzugt. Dabei bezeichnet die Zahl in eckigen Klammern die Gesamtzahl an Atomen im Ring des Kronenethers, während die nachgestellte Zahl die Anzahl der in dieser Krone vorhanden Sauerstoffatome angibt, wobei alle Kronenether aus Gruppen -CH₂CH₂O- aufgebaut sind.

Falls es sich bei dem erfindungsgemäß eingesetzten Chelatkomplexbildner (C) um Heterocyclus aufweisende Verbindung (C2) handelt, dessen im Cyclus befindliches Heteroatom über ein freies Elektronenpaar verfügt und der mindestens ein weiteres Heteroatom mit einem freien Elektronenpaar enthält, wobei vorzugsweise beide Heteroatome zusammen befähigt sind, einen Chelatkomplex mit einem zentralen Metallion einzugehen, sind Verbindungen mit mindestens einem stickstoffhaltigen Heterocyclus, wie z.B. 2,2'-Bipyridin, 8-Hydroxychinolin, Phenanthrolin oder 1,4,7,10-Tetraazacyclododecan-1,4,7,10-tetraessigsäure, sowie Derivate dieser Verbindungen bevorzugt.

Falls es sich bei dem erfindungsgemäß eingesetzten Chelatkomplexbildner (C) um Verbindungen (C3) mit mindestens zwei Gruppen pro Molekül, die ausgewählt werden aus Carboxylgruppen, Carboxylatgruppen, Sulfatgruppen, Sulfonatgruppen, Phosphatgruppen, Phosphonatgruppen, Cyanidgruppen und Cyanatgruppen, handelt, sind Verbindungen mit mindestens zwei Carboxylgruppen oder Verbindungen mit mindestens zwei Carboxylatgruppen bevorzugt.

Bevorzugte Beispiele für Komponenten (C3) sind Oxalsäure, Malonsäure, Bernsteinsäure, Glutarsäure, Adipinsäure, Pimelinsäure, Suberinsäure, Azelainsäure, Sebacinsäure, Tartronsäure, Äpfelsäure, Weinsäure, α-Ketoglutarsäure, Oxalessigsäure, 2,3-Dimercaptobernsteinsäure, Maleinsäure, Phthalsäure, Glutaminsäure, Asparaginsäure, Citronensäure, Trimellitsäure, Iminodiessigsäure, Nitrilotriessigsäure, Ethylendiamintetraessigsäure (EDTA), Diethylentriaminpentaessigsäure, Triethylentetraminhexaessigäure sowie deren Carboxylate und/oder Teilcarboxylate. Unter den Carboxylaten und/oder Teilcarboxylaten sind Alkalimetall- oder Erdalkalimetallcarboxylate und/oder -teilcarboxylate bevorzugt, wobei Natrium- oder Kaliumcarboxylate und/oder - teilcarboxylate, insbesondere die Natrium- oder Kaliumcarboxylate, besonders bevorzugt sind.

Besonders bevorzugt handelt es sich bei Komponente (C3) um Bernsteinsäure, Äpfelsäure, Citronensäure, Weinsäure oder Ethylendiamintetraessigsäure (EDTA).

Als Chelatkomplexbildner (C) werden erfindungsgemäß bevorzugt Verbindungen (C3) eingesetzt.

Erfindungsgemäß kann der Chelatkomplexbildner (C) in reiner Form als auch in Form einer Lösung in einem organischen Lösungsmittel zugeben werden. Beispiele für organische Lösungsmittel sind niedermolekulare Ether, Ester, Ketone, aromatische und aliphatische sowie gegebenenfalls halogenhaltige Kohlenwasserstoffe und Alkohole, wobei Alkohole, insbesondere Methanol, Ethanol, Propanol, iso-Propanol, Butanol, iso-Butanol und t-Butanol, bevorzugt sind.

Im zweiten Schritt des erfindungsgemäßen Verfahrens wird Chelatkomplexbildner (C) vorzugsweise in einer solchen Menge zugegeben, dass ein molares Verhältnis von Metallionen aus Komponente (B) zu Chelatkomplexbildnern (C) von 0,8 bis 1 000, besonders bevorzugt von 1,0 bis 10,0, insbesondere von 1,0 bis 3,0, resultiert.

Im erfindungsgemäßen Verfahren kann der Chelatkomplexbildner (C) zu jedem beliebigen Zeitpunkt nach der Herstellung der Polymeren (A) gemäß erstem Schritt zugegeben werden. Bevorzugt erfolgt der Zusatz des Chelatkomplexbildners (C) vor der Zugabe weiterer Komponenten zum hergestellten Polymer (A), besonders bevorzugt vor der Zugabe von weiteren stickstoffhaltigen Verbindungen, insbesondere vor Zugabe eines stickstoffhaltigen Haftvermittlers.

Im erfindungsgemäßen Verfahren erfolgt die Zugabe des Chelatkomplexbildners (C) gemäß zweiten Schritt bei Temperaturen von bevorzugt 0 bis 150°C, besonders bevorzugt bei 10 bis 100°C. Der zweite Schritt des erfindungsgemäßen Verfahrens wird vorzugsweise bei einem Druck der umgebenden Atmosphäre, also etwa 900 bis 1100 hPa, durchgeführt.

Vorzugsweises wird auch der zweite Verfahrensschritt unter Schutzgas, z.B. unter Stickstoff, durchgeführt.

Die Zugabe des Chelatkomplexbildners (C) kann dabei sowohl kontinuierlich, z.B. mit Hilfe eines Statikmischers erfolgen, als auch diskontinuierlich durchgeführt werden.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Die erfindungsgemäß hergestellten organyloxysilylterminierten Polymere (A) bzw. die erfindungsgemäße Zusammensetzung können überall dort eingesetzt werden, wo auch bisher organyloxysilylterminierte Polymere eingesetzt wurden. Vor allem eignen sie sich zur Verwendung in vernetzbaren Massen, d.h. als Bindemittel für Klebstoffe, Dichtstoffe und/oder Beschichtungen. Auf Grund ihrer verbesserten Farbstabilität sind sie insbesondere für einen Einsatz in weißen und/oder transparenten Massen geeignet, wobei einem Einsatz in transparenten Massen eine besondere Bedeutung zukommt.

Abhängig von der spezifischen Anwendung bzw. dem jeweiligen Anforderungsprofil können die erfindungsgemäßen Zusammensetzung zusätzlich zu den Komponenten (A) und (U) weitere Bestandteile enthalten, ausgewählt aus (D) Stickstoff aufweisende Organosiliciumverbindungen, (E) Siliconharze, (F) Katalysatoren, (G) Haftvermittler, (H) Wasserfänger, (I) Füllstoffe, (J) Additive und (K) Zuschlagstoffe.

Bevorzugt handelt es sich bei den erfindungsgemäßen Zusammensetzungen um vernetzbare Massen enthaltend
(A) organyloxysilylterminierte Polymere,
(U) Umsetzungsprodukt aus Katalysator (B) und Chelatkomplexbildner (C),
   gegebenenfalls (D) Stickstoff aufweisende Organosiliciumverbindungen,
   gegebenenfalls (E) Siliconharze,
   gegebenenfalls (F) Katalysatoren,
   gegebenenfalls (G) Haftvermittler,
   gegebenenfalls (H) Wasserfänger,
   gegebenenfalls (I) Füllstoffe,
   gegebenenfalls (J) Additive und
   gegebenenfalls (K) Zuschlagstoffe.

Die Komponenten (D) bis (K) sowie ihre bevorzugten Einsatzmengen sind dabei vielfach beschrieben, beispielsweise WO-A 2015024773 auf Seite 12, Zeile 24 bis Seite 23, Zeile 21.

Besonders bevorzugt handelt es sich bei den erfindungsgemäßen Zusammensetzungen um vernetzbare Massen enthaltend
(A) organyloxysilylterminierte Polymere,
(U) Umsetzungsprodukt aus Katalysator (B) und Chelatkomplexbildner (C),
(D) Stickstoff aufweisende Organosiliciumverbindungen,
   gegebenenfalls (E) Siliconharze,
   gegebenenfalls (F) Katalysatoren,
   gegebenenfalls (G) Haftvermittler,
   gegebenenfalls (H) Wasserfänger,
   gegebenenfalls (I) Füllstoffe,
   gegebenenfalls (J) Additive und
   gegebenenfalls (K) Zuschlagstoffe.

Insbesondere bevorzugt handelt es sich bei den erfindungsgemäßen Zusammensetzungen um vernetzbare Massen bestehend aus
(A) organyloxysilylterminierte Polymere,
(U) Umsetzungsprodukt aus Katalysator (B) und Chelatkomplexbildner (C),
(D) Stickstoff aufweisende Organosiliciumverbindungen,
   gegebenenfalls (E) Siliconharze,
   gegebenenfalls (F) Katalysatoren,
   gegebenenfalls (G) Haftvermittler,
   gegebenenfalls (H) Wasserfänger,
   gegebenenfalls (I) Füllstoffe,
   gegebenenfalls (J) Additive und
   gegebenenfalls (K) Zuschlagstoffe.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Die Herstellung der erfindungsgemäßen Klebstoffe, Dichtstoffe oder Beschichtungen kann nach beliebiger und an sich bekannter Art und Weise erfolgen, wie etwa nach Methoden und Mischverfahren, wie sie zur Herstellung von feuchtigkeitshärtenden Zusammensetzungen üblich sind. Die Reihenfolge, in der die verschiedenen Bestandteile miteinander vermischt werden, kann dabei beliebig variiert werden.

Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 30 bis 130°C. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen. Das erfindungsgemäße Vermischen erfolgt bevorzugt unter Ausschluss von Feuchtigkeit.

Das erfindungsgemäße Verfahren hat den Vorteil, dass es schnell und einfach in der Durchführung ist, wobei leicht verfügbare Rohstoffe als Substrate eingesetzt werden.

Der Vorteil des erfindungsgemäßen Verfahrens liegt in der Tatsache, dass sich die hergestellten Polymere (A) durch eine verbesserte Stabilität gegenüber Luftfeuchtigkeit auszeichnen.

Ein weiterer Vorteil des erfindungsgemäßen Verfahrens ist, dass die hergestellten Polymere direkt weiterverwendet werden können, z.B. zur Herstellung von vernetzbaren Massen.

Die erfindungsgemäßen Zusammensetzungen haben den Vorteil, dass sie sich durch eine verbesserte Lagerstabilität und eine bessere Stabilität gegen thermische Belastungen auszeichnen. Zudem zeigen sie eine hohe Farbstabilität und keine Tendenz zu einer Grau- oder Schwarzfärbung.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50% durchgeführt. Des Weiteren beziehen sich alle Angaben von Teilen und Prozentsätzen, soweit nichts anderes angegeben ist, auf das Gewicht.

### Beispiel 1

In einem 2 1-Vierhalskolben mit Tropftrichter, Liebigkühler, KPG-Rührer und Thermometer werden 1000 g eines Polypropylenglycols mit einer zahlenmittleren Molekülmasse von 12 000 g/mol (Acclaim PPG 12200, käuflich erhältlich bei der Fa. Covestro AG, D-Leverkusen) vorgelegt, auf 80 °C erwärmt und für 2 h bei einem Druck von 10 mbar (Vakuum), getrocknet.

Das Vakuum wird mit Stickstoff gebrochen, und es werden innerhalb von 15 min 32,3 g α-Isocyanatomethyl-methyldimethoxysilan (GENIOSIL^{®} XL 42, käuflich erhältlich bei der Wacker Chemie AG, D-München) unter Rühren zugetropft. Die Temperatur bleibt dabei bei 80 °C. Danach werden 0,17 g eines bismuthaltigen Katalysators (käuflich erhältlich unter der Bezeichnung "Borchi-Kat 315" der Fa. OMG-Borchers, D-Langenfeld) zugegeben. Darin sind 0,0272 g Bismut in der Oxidationsstufe +3 enthalten. Es kommt zu einer geringfügigen Erwärmung der Reaktionsmischung (< 5°C). Anschließend wird für 2 h bei 80 °C gerührt. Im IR-Spektrum der Reaktionsmasse ist danach noch ein kleiner Isocyanat-Peak vorhanden, der 2 bis 5% der ursprünglich eingesetzten Menge an Isocyanatgruppen entspricht.

Man lässt auf 50 °C abkühlen und gibt bei dieser Temperatur 1,3 g Methanol zu, um das restliche Isocyanat zu vernichten. Nach 0,5 h lässt man die Reaktionsmischung auf Raumtemperatur abkühlen. Ein danach aufgenommenes IR-Spektrum bestätigt die Isocyanatfreiheit.

Anschließend werden als letzten Schritt bei Raumtemperatur 0,035 g Äpfelsäure gelöst in 0,070 g Methanol der erhaltenen Polymermischung zugegeben und für 0,25 h bei Raumtemperatur gerührt. Die so erhaltene Zusammensetzung ist farblos und klar.

### Beispiele 2-6

Die in Beispiel 1 beschriebene Arbeitsweise wird wiederholt, mit der Abänderung, dass im letzten Schritt anstelle der Äpfelsäure die in Tabelle 1 genannten Chelatkomplexbildner zugegeben werden. Die Zugabe erfolgt in Beispiel 2 in Substanz, wobei das feste EDTA durch intensives Rühren für einen Zeitraum von 10 min in die Polymermischung eingebracht wird, und in den Beispielen 3-6 jeweils als 33 Gew.-%-ige Lösung in Methanol.

**Tabelle 1:**

| **Beispiel** | **Menge [g]** | **Chelatkomplexbildner** |
|---|---|---|
| 2 | 0,0380 | Ethylendiamintetraessigsäure (EDTA) |
| 3 | 0,0250 | Zitronensäure |
| 4 | 0,0302 | Maleinsäure |
| 5 | 0,0271 | Malonsäure |
| 6 | 0,0235 | Oxalsäure |

### Vergleichsbeispiel 1 (V1)

Die in Beispiel 1 beschriebene Arbeitsweise wird wiederholt, mit der Abänderung, dass auf die Zugabe der Äpfelsäure ersatzlos verzichtet wird.

### Beispiel 7: Untersuchung der Farbstabilität

95 g der in den Beispielen 1-6 sowie in dem Vergleichsbeispiel V1 erhaltenen Polymermischungen werden jeweils mit 2,5 g 3-Aminopropyl-trimethoxysilan (GENIOSIL^{®} GF 96, käuflich erhältlich bei der Wacker Chemie AG, D-München) und 2,5 g Vinyl-trimethoxysilan (GENIOSIL^{®} XL 10, käuflich erhältlich bei der Fa. Wacker Chemie AG, D-München) in einem Mischbecher eingewogen und bei 2000 U/min für 1 min im Speedmixer DAC 150 FV der Fa. Hauschild homogenisiert.

Die erhaltene farblose und klare Masse wird in eine Glasflasche gefüllt, welche luftdicht verschlossen wird. Anschließend wird diese für 96 h bei 70 °C gelagert, wobei alle 24 h eine optisehe Begutachtung erfolgt. Dabei werden die in Tabelle 2 dargestellten Resultate erhalten.

**Tabelle 2:**

| **Probe aus Beispiel** | **Chelatkomplexbildner** | **Aussehen nach 24 h** | **Aussehen nach 48 h** | **Aussehen nach 72 h** | **Aussehen nach 96 h** |
|---|---|---|---|---|---|
| 1 | Äpfelsäure | farblos, klar | farblos, klar | farblos, klar | schwarz, trüb |
| 2 | EDTA | farblos, klar | farblos, klar | schwarz, trüb | schwarz, trüb |
| 3 | Zitronensäure | farblos, klar | farblos, klar | farblos, klar | farblos, klar |
| 4 | Maleinsäure | farblos, klar | gelblich, klar | schwarz, trüb | schwarz, trüb |
| 5 | Malonsäure | farblos, klar | gräulich, leicht trüb | schwarz, trüb | schwarz, trüb |
| 6 | Oxalsäure | farblos, klar | schwarz, trüb | schwarz, trüb | schwarz, trüb |
| V1 | ohne | trüb, schwarz | schwarz, trüb | schwarz, trüb | schwarz, trüb |

### Beispiel 8

### Herstellung des Phenylsiliconharzes

In einem 2 1-Vierhalskolben mit Tropftrichter, Liebigkühler, KPG-Rührer und Thermometer werden 1000 g Phenyltrimethoxysilan bei Raumtemperatur vorgelegt und unter Rührung mit 20 g einer 20%-igen wässrigen Salzsäure versetzt. Anschließend wird auf eine Temperatur von 65-68 °C erwärmt, bis ein schwacher Rückfluss einsetzt. Dann wird unter Rückfluss eine Mischung aus 74 g Wasser und 40 g Methanol gleichmäßig innerhalb von 30 min zugegeben. Nach Ende der Zugabe wird für weitere 10 min unter Rückfluss gerührt und danach auf Raumtemperatur abgekühlt.

Die Reaktionsmischung wird für ca. 16 h bei Raumtemperatur stehen gelassen, anschließend werden 60 g Natriumhydrogencarbonat unter Rührung zugeben, es wird für 30 min gerührt, dann wird der entstandene Feststoff durch Filtration abgetrennt. Zuletzt werden die Leichtsieder (im Wesentlichen Methanol) destillativ entfernt. Dabei werden zunächst ca. 80-90% der abzunehmenden Destillatmenge bei 1013 mbar und einer Temperatur von 120 °C entfernt, anschließend wird der Druck auf 10 mbar reduziert, und während der folgenden 15-20 min werden die verbleibenden leichtsiedenden Reste abdestilliert.

Es wird ein Phenylsiliconharz mit einer mittleren Molmasse Mn von 1200 g/mol, einer Viskosität von 90 mPas bei 23 °C und einem Gehalt an Methoxygruppen von 18 Gew.-% bezogen auf die gesamte Masse des Phenylsiliconharzes erhalten.

### Untersuchung der Farbstabilität

35 g der Polymermischungen aus den Beispielen 1-3 sowie dem Vergleichsbeispiel V1 werden jeweils mit 60 g Phenylsiliconharz, dessen Herstellung oben beschrieben ist, 2,5 g 3-Aminopropyl-trimethoxysilan (GENIOSIL^{®} GF 96, käuflich erhältlich bei der Wacker Chemie AG, D-München) und 2,5 g Vinyl-trimethoxysilan (GENIOSIL^{®} XL 10, käuflich erhältlich bei der Wacker Chemie AG, D-München) in einem Mischbecher eingewogen und bei 2000 U/min für 1 min im Speedmixer DAC 150 FV der Fa. Hauschild homogenisiert.

Die erhaltenen farblosen und klaren Massen werden in Glasflaschen gefüllt, welche luftdicht verschlossen werden. Anschließend werden diese für 96 h bei 70 °C gelagert, wobei alle 24 h eine optische Begutachtung erfolgt. Dabei werden die in Tabelle 3 dargestellten Resultate erhalten.

**Tabelle 3:**

| **Probe aus Beispiel** | **Chelatkomplex-bildner** | **Aussehen nach 24 h** | **Aussehen nach 48 h** | **Aussehen nach 72 h** | **Aussehen nach 96 h** |
|---|---|---|---|---|---|
| 1 | Äpfelsäure | farblos, klar | farblos, klar | farblos, klar | schwarz, trüb |
| 2 | EDTA | farblos, klar | grau, leicht trüb | schwarz, trüb | schwarz, trüb |
| 3 | Zitronensäure | farblos, klar | farblos, klar | farblos, klar | farblos, klar |
| V1 | ohne | schwarz, trüb | schwarz, trüb | schwarz, trüb | schwarz, trüb |

### Beispiel 9

In einem 2 1-Vierhalskolben mit Tropftrichter, Liebigkühler, KPG-Rührer und Thermometer werden 1000 g eines Polypropylenglycols mit einer zahlenmittleren Molekülmasse von 18 000 g/mol (Acclaim PPG 18200, käuflich erhältlich bei der Fa. Covestro AG, D-Leverkusen) vorgelegt, auf 80 °C erwärmt und für 2 h bei einem Druck von 10 mbar (Vakuum) getrocknet.

Das Vakuum wird mit Stickstoff gebrochen, und es werden innerhalb von 15 min 27,4 g γ-Isocyanatopropyl-trimethoxysilan (GENIOSIL^{®} GF 40, käuflich erhältlich bei der Wacker Chemie AG, D-München) unter Rühren zugetropft. Die Temperatur bleibt dabei bei 80 °C. Danach werden 0,17 g eines bismut- und zinkhaltigen Katalysators (käuflich erhältlich unter der Bezeichnung "Borchi-Kat VP 244" der Fa. OMG-Borchers, D-Langenfeld) zugegeben. Dabei kommt es zu einer geringfügigen Erwärmung der Reaktionsmischung (< 3 °C). Anschließend wird für 2 h bei 80 °C gerührt. Im IR-Spektrum der Reaktionsmasse ist danach noch ein kleiner Isocyanat-Peak vorhanden, der 2 bis 5% der ursprünglich eingesetzten Menge an Isocyanatgruppen entspricht.

Man lässt auf 50 °C abkühlen und gibt bei dieser Temperatur 1,1 g Methanol zu, um das restliche Isocyanat zu vernichten. Nach 0,5 h lässt man die Reaktionsmischung auf Raumtemperatur abkühlen. Ein danach aufgenommenes IR-Spektrum bestätigt die Isocyanatfreiheit.

Anschließend werden als letzten Schritt bei Raumtemperatur 0,035 g Äpfelsäure gelöst in 0,070 g Methanol der erhaltenen Polymermischung zugegeben und für 0,25 h bei Raumtemperatur gerührt. Die so erhaltene Zusammensetzung ist farblos und klar.

### Beispiele 10-13

Die in Beispiel 9 beschriebene Arbeitsweise wird wiederholt, mit der Abänderung, dass anstelle der Äpfelsäure die in Tabelle 4 genannten Chelatkomplexbildner zugegeben werden. Die Zugabe erfolgt in Beispiel 10 in Substanz, wobei das feste EDTA durch intensives Rühren für einen Zeitraum von 10 min in die Polymermischung eingebracht wird, und in den Beispielen 11-13 jeweils als 33 Gew.-%-ige Lösung in Methanol.

**Tabelle 4:**

| **Beispiel** | **Menge [g]** | **Chelatkomplexbildner** |
|---|---|---|
| 10 | 0,040 | Ethylendiamintetraessigsäure (EDTA) |
| 11 | 0,030 | Zitronensäure |
| 12 | 0,030 | Bernsteinsäure |
| 13 | 0,040 | Weinsäure |

### Vergleichsbeispiel V2

Die in Beispiel 9 beschriebene Arbeitsweise wird wiederholt, mit der Abänderung, dass keine Äpfelsäureeingesetzt wird.

### Beispiel 14: Untersuchung der Farbstabilität

Die in Beispiel 7 beschriebene Arbeitsweise wird wiederholt, mit der Abänderung, dass die Polymermischungen aus den Beispielen 9-13 sowie dem Vergleichsbeispiel V2 eingesetzt werden. Bei der Untersuchung der jeweiligen Farbstabilitäten werden die in Tabelle 5 dargestellten Resultate erhalten.

**Tabelle 5:**

| **Probe aus Beispiel** | **Chelatkomplexbildner** | **Aussehen nach 24 h** | **Aussehen nach 48 h** | **Aussehen nach 72 h** | **Aussehen nach 96 h** |
|---|---|---|---|---|---|
| 9 | Äpfelsäure | farblos, klar | farblos, klar | farblos, klar | schwarz, trüb |
| 10 | EDTA | farblos, klar | gräulich, leicht trüb | schwarz, trüb | schwarz, trüb |
| 11 | Zitronensäure | farblos, klar | farblos, klar | farblos, klar | farblos, klar |
| 12 | Bernsteinsäure | farblos, klar | schwarz, trüb | schwarz, trüb | schwarz, trüb |
| 13 | Weinsäure | farblos, klar | schwarz, trüb | schwarz, trüb | schwarz, trüb |
| V2 | ohne | schwarz, trüb | schwarz, trüb | schwarz, trüb | schwarz, trüb |

### Beispiel 15

Die in Beispiel 9 beschriebene Arbeitsweise wird wiederholt, mit der Abänderung, dass bei der Umsetzung des Polypropylenglycols mit dem Isocyanatosilan kein bismut- und zinkhaltiger Katalysator eingesetzt wird. Stattdessen werden 0,20 g Eisentris-acetylacetonat (käuflich erhältlich bei der Fa. Sigma-Aldrich, D-Taufkirchen) zugegeben. Darin sind 0,0316 g Eisen in der Oxidationsstufe +3 enthalten.

Anschließend werden als letzten Schritt bei Raumtemperatur 0,035 g Äpfelsäure gelöst in 0,070 g Methanol der erhaltenen Polymermischung zugegeben und für 0,25 h bei Raumtemperatur gerührt. Die so erhaltene Zusammensetzung ist klar und leicht orangefarben.

### Beispiel 16

Die in Beispiel 15 beschriebene Arbeitsweise wird wiederholt, mit der Abänderung, dass im letzten Schritt keine Äpfelsäure zugegeben wird. Stattdessen erfolgt eine Zugabe von 0,03 g Zitronensäure gelöst in 0,070 g Methanol. Es wird eine klare, leicht orangefarbene Masse erhalten.

### Vergleichsbeispiel V3

Die in Beispiel 15 beschriebene Arbeitsweise wird wiederholt, mit der Abänderung, dass auf die Zugabe der in Methanol gelösten Äpfelsäure ersatzlos verzichtet wird. Auch hier wird eine klare, leicht orangefarbene Masse erhalten.

### Beispiel 17

Die in Beispiel 9 beschriebene Arbeitsweise wird wiederholt, mit der Abänderung, dass bei der Umsetzung des Polypropylenglycols mit dem Isocyanatosilan kein bismut- und zinkhaltiger Katalysator eingesetzt wird. Stattdessen werden 0,20 g Dibutylzinndilaurat (käuflich erhältlich bei der Fa. Sigma-Aldrich, D-Taufkirchen) eingesetzt. Darin sind 0,0375 g Zinn in der Oxidationsstufe +4 enthalten.

Anschließend werden als letzten Schritt bei Raumtemperatur 0,035 g Äpfelsäure gelöst in 0,070 g Methanol der erhaltenen Polymermischung zugegeben und für 0,25 h bei Raumtemperatur gerührt. Die so erhaltene Zusammensetzung ist farblos und klar.

### Beispiel 18

Die in Beispiel 17 beschriebene Arbeitsweise wird wiederholt, mit der Abänderung, dass im letzten Schritt keine Äpfelsäure zugegeben wird. Stattdessen erfolgt eine Zugabe von 0,03 g Zitronensäure gelöst in 0,070 g Methanol. Es wird eine klare, farblose Masse erhalten.

### Vergleichsbeispiel V4

Die in Beispiel 17 beschriebene Arbeitsweise wird wiederholt, mit der Abänderung, dass auf die Zugabe der in Methanol gelösten Äpfelsäure ersatzlos verzichtet wird. Auch hier wird eine klare, farblose Masse erhalten.

### Beispiel 19: Untersuchung der Lagerstabilität bei Luftkontakt

Zur Untersuchung der Lagerstabilität bei Luftkontakt werden die Polymere aus den Beispielen 15-18 sowie den Vergleichsbeispielen V2, V3 und V4 jeweils ohne den Zusatz weiterer Stoffe auf ein Uhrglas gegeben, und die Hautbildungszeit wird bestimmt.

Zur Bestimmung der Hautbildungszeit wird während des Aushärtens bei Normklima, d.h. bei 23 °C und einer relativen Luftfeuchtigkeit von etwa 50 %, in regelmäßigen Abständen ein trockener Laborspatel vorsichtig auf der Polymeroberfläche aufgesetzt und nach oben gezogen. Bleibt dabei noch Material am Spatel kleben, hat sich noch keine Haut gebildet. Bleibt keine Probe am Spatel mehr kleben, so hat sich eine Haut gebildet und die Zeit wird notiert. Dabei werden die in Tabelle 6 dargestellten Resultate erhalten.

**Tabelle 6:**

| **Probe aus Beispiel** | **Katalysator** | **Chelatkomplexbildner** | **Hautbildungszeit** |
|---|---|---|---|
| 9 | Borchi-Kat VP 244 | Äpfelsäure | >7 Tage |
| 10 | Borchi-Kat VP 244 | EDTA | >7 Tage |
| 11 | Borchi-Kat VP 244 | Zitronensäure | >7 Tage |
| V2 | Borchi-Kat VP 244 | ohne | 4 Tage |
| 15 | Eisen-tris-acetylacetonat | Äpfelsäure | >7 Tage |
| 16 | Eisen-tris-acetylacetonat | Zitronensäure | >7 Tage |
| V3 | Eisen-tris-acetylacetonat | ohne | 36 h |
| 17 | Dibutylzinndilaurat | Äpfelsäure | >7 Tage |
| 18 | Dibutylzinndilaurat | Zitronensäure | 5 Tage |
| V4 | Dibutylzinndilaurat | ohne | 12 h |

### Beispiel 20

In einem 2000 ml Reaktionsgefäß mit Rühr-, Kühl- und Heizmöglichkeiten werden 630 g (0,15 Mol) eines Polypropylenglycols mit einer mittleren Molmasse Mₙ von 4200 g/Mol (käuflich erhältlich unter der Bezeichnung Acclaim^{®} 4200 bei der Fa. Covestro AG, D-Leverkusen) vorgelegt und für 2 h bei 80°C und 1 mbar unter Rühren getrocknet. Dann wird auf Raumtemperatur abgekühlt, und anschließend werden 112,5 g (0,45 Mol) einer flüssigen Mischung aus 2,4'- und 4,4'-MDI (käuflich erhältlich unter der Bezeichnung Desmodur^{®} 2460M bei der Fa. Covestro AG, D-Leverkusen) zugegeben. Unmittelbar danach werden 0,13 g eines bismuthaltigen Katalysators (käuflich erhältlich unter der Bezeichnung "Borchi-Kat 315" der Fa. OMG-Borchers, D-Langenfeld) zugegeben, woraufhin eine leicht exotherme Reaktion einsetzt, die zu einer Erwärmung der Reaktionsmischung um ca. 13°C führt. In dem Katalysator sind 0,0208 g Bismut in der Oxidationsstufe +3 enthalten. Die Reaktionsmischung wird für weitere 60 min ohne externe Heizung gerührt, wobei sie sich wieder auf Raumtemperatur abkühlt. Anschließend werden 156,8 g (0,6 Mol) 3-(N-Cyclohexyl)aminopropyl-trimethoxysilan (käuflich erhältlich unter der Bezeichnung GENIOSIL^{®} GF 92 bei der Fa. Wacker Chemie AG, D-München) zugegeben. Schließlich wird auf 80°C erwärmt und für 1 h bei dieser Temperatur gerührt. In der resultierenden Polymermischung lassen sich IR-spektroskopisch keine Isocyanatgruppen mehr nachweisen.

Anschließend werden als letzten Schritt bei Raumtemperatur 0,019 g Zitronensäure gelöst in 0,05 g Methanol zugegeben und für 0,25 h bei Raumtemperatur gerührt. Es wird eine klare, farblose Masse erhalten.

### Vergleichsbeispiel V5

Die in Beispiel 20 beschriebene Arbeitsweise wird wiederholt, mit der Abänderung, dass auf die Zugabe der Zitronensäure ersatzlos verzichtet wird.

### Beispiel 21: Untersuchung der Farbstabilität

Es wird so vorgegangen wie in Beispiel 7, wobei jedoch die Polymermischungen aus dem Beispiel 20 sowie dem Vergleichsbeispiel V5 eingesetzt werden. Bei der Untersuchung der jeweiligen Farbstabilitäten werden die in Tabelle 7 dargestellten Resultate erhalten.

**Tabelle 7:**

| **Probe aus Beispiel** | **Chelatkomplexbildner** | **Aussehen nach 24 h** | **Aussehen nach 48 h** | **Aussehen nach 72 h** | **Aussehen nach 96 h** |
|---|---|---|---|---|---|
| 20 | Zitronensäure | farblos, klar | farblos, klar | farblos, klar | farblos, klar |
| V5 | ohne | schwarz, trüb | farblos, klar | farblos, klar | farblos, klar |

## Patentansprüche

1. Verfahren zur Herstellung von organyloxysilylterminierten Polymeren (A), **dadurch gekennzeichnet, dass**
in einem ersten Schritt
mindestens eine hydroxyfunktionelle organische Verbindung mit mindestens einer isocyanatfunktionellen Verbindung sowie gegebenenfalls einem Organyloxygruppen aufweisenden Silan in Anwesenheit von mindestens einem metallhaltigen Katalysator (B) umgesetzt wird und
in einem zweiten Schritt
die so erhaltene Reaktionsmischung mit Chelatkomplexbildner (C) versetzt wird, der ausgewählt wird aus
(C1) Kronenether,
(C2) Heterocyclus aufweisende Verbindung, deren im Cyclus befindliches Heteroatom über ein freies Elektronenpaar verfügt und die mindestens ein weiteres Heteroatom mit einem freien Elektronenpaar enthält, und
(C3) Verbindung enthaltend mindestens zwei Gruppen pro Molekül, die ausgewählt werden aus Carboxylgruppen, Carboxylatgruppen, Sulfatgruppen, Sulfonatgruppen, Phosphatgruppen, Phosphonatgruppen, Cyanidgruppen und Cyanatgruppen.

2. Verfahren nach Anspruch 1, **dadurch gekennzeichnet, dass** es sich bei den hydroxyfunktionellen organischen Verbindungen um Polyole (A1) der Formel
Y-[OH]ₓ (V)
handelt, wobei
Y einen x-wertigen Polymerrest bedeutet und
x eine ganze Zahl von 1 bis 10 ist.

3. Verfahren nach Anspruch 1 oder 2, **dadurch gekennzeichnet, dass** es sich bei den isocyanatfunktionellen Verbindungen um solche ausgewählt aus isocyanatofunktionellen Silanen (A2) der Formel
OCN-(CR¹₂)_{b}-SiRₐ(OR²)₃₋ₐ (VI),
wobei
R gleich oder verschieden sein kann und einen einwertigen, gegebenenfalls substituierten, SiC-gebundenen Kohlenwasserstoffrest darstellt,
R¹ gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
R² gleich oder verschieden sein kann und Wasserstoffatom oder einen einwertigen, gegebenenfalls substituierten Kohlenwasserstoffrest darstellt,
a gleich oder verschieden sein kann und 0, 1 oder 2 ist und
b gleich oder verschieden sein kann und eine ganze Zahl von 1 bis 10 ist, und Di- und/oder Polyisocyanaten (A3) handelt.

4. Verfahren nach einem oder mehreren der Ansprüche 1 bis 3, **dadurch gekennzeichnet, dass** es sich bei dem Chelatkomplexbildner (C) um Verbindungen (C3) handelt.

5. Verfahren nach einem oder mehreren der Ansprüche 1 bis 4, **dadurch gekennzeichnet, dass** Chelatkomplexbildner (C) in einer solchen Menge zugegeben wird, dass ein molares Verhältnis von Metallionen aus Komponente (B) zu Chelatkomplexbildnern (C) von 0,8 bis 1 000 resultiert.

6. Verfahren nach einem oder mehreren der Ansprüche 1 bis 5, **dadurch gekennzeichnet, dass** im ersten Schritt Polyole (A1) mit isocyanatofunktionellen Silanen (A2) in Anwesenheit von Katalysator (B) umgesetzt werden.

7. Verfahren nach einem oder mehreren der Ansprüche 1 bis 5, **dadurch gekennzeichnet, dass** im ersten Schritt Polyole (A1) mit Di- und/oder Polyisocyanaten (A3) sowie organyloxyfunktionellen, Aminogruppen aufweisenden Silanen (A4) in Anwesenheit von Katalysator (B) umgesetzt werden.

8. Zusammensetzungen enthaltend
(A) organyloxysilylterminierte Polymere, herstellbar durch Umsetzung von mindestens einer hydroxyfunktionellen organischen Verbindung mit mindestens einer isocyanatfunktionellen Verbindung sowie gegebenenfalls einem Organyloxygruppen aufweisenden Silan in Anwesenheit von mindestens einem metallhaltigen Katalysator (B),
sowie
(U) mindestens ein Umsetzungsprodukt aus Katalysator (B) und Chelatkomplexbildner (C).

9. Zusammensetzungen gemäß Anspruch 8, **dadurch gekennzeichnet, dass** es sich bei den Polymeren (A) um solche der Formel
Y-[X-NR³-(CR¹₂)_{b}-SiRₐ(OR²)₃₋ₐ]ₓ (I)
handelt, wobei
Y einen x-wertigen Polymerrest bedeutet,
R gleich oder verschieden sein kann und einen einwertigen, gegebenenfalls substituierten, SiC-gebundenen Kohlenwasserstoffrest darstellt,
R¹ gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
R² gleich oder verschieden sein kann und Wasserstoffatom oder einen einwertigen, gegebenenfalls substituierten Kohlenwasserstoffrest darstellt,
R³ gleich oder verschieden sein kann und Wasserstoffatom, einen einwertigen, gegebenenfalls substituierten Kohlenwasserstoffrest oder eine Gruppe -CH(COOR⁴)-CH₂-COOR⁴ darstellt,
R⁴ gleich oder verschieden sein kann und einen einwertigen, gegebenenfalls substituierten Kohlenwasserstoffrest darstellt,
X eine Gruppe -NH-C(=O)- oder -O-C(=O)- darstellt,
x eine ganze Zahl von 1 bis 10 ist,
a gleich oder verschieden sein kann und 0, 1 oder 2 ist und
b gleich oder verschieden sein kann und eine ganze Zahl von 1 bis 10 ist.

## Claims

1. Process for preparing organyloxysilyl-terminated polymers (A), **characterized in that**
in a first step
at least one hydroxy-functional organic compound is reacted with at least one isocyanate-functional compound and also, optionally, with a silane containing organyloxy groups, in the presence of at least one metal-containing catalyst (B), and
in a second step
the resulting reaction mixture is admixed with chelating agent (C), which is selected from
(C1) crown ether,
(C2) heterocycle-containing compound whose heteroatom located in the cyclic moiety possesses a free electron pair, and which comprises at least one further heteroatom having a free electron pair, and
(C3) compound containing at least two groups per molecule that are selected from carboxyl groups, carboxylate groups, sulfate groups, sulfonate groups, phosphate groups, phosphonate groups, cyanide groups, and cyanate groups.

2. Process according to Claim 1, **characterized in that** the hydroxy-functional organic compounds comprise polyols (A1) of the formula
Y-[OH]ₓ (V)
where
Y is an x-valent polymer radical and
x is an integer from 1 to 10.

3. Process according to Claim 1 or 2, **characterized in that** the isocyanate-functional compounds are compounds selected from isocyanato-functional silanes (A2) of the formula
OCN-(CR¹₂)_{b}-SiRₐ(OR²)₃₋ₐ (VI),
where
R may be identical or different and is a monovalent, optionally substituted, SiC-bonded hydrocarbon radical,
R¹ may be identical or different and is hydrogen atom or a monovalent, optionally substituted hydrocarbon radical which may be attached via nitrogen, phosphorus, oxygen, sulfur, or carbonyl group to the carbon atom,
R² may be identical or different and is hydrogen atom or a monovalent, optionally substituted hydrocarbon radical,
a may be identical or different and is 0, 1 or 2, and
b may be identical or different and is an integer from 1 to 10, and di- and/or polyisocyanates (A3).

4. Process according to one or more of Claims 1 to 3, **characterized in that** the chelating agent (C) comprises compounds (C3).

5. Process according to one or more of Claims 1 to 4, **characterized in that** chelating agent (C) is added in an amount such as to result in a molar ratio of metal ions from component (B) to chelating agents (C) of 0.8 to 1000.

6. Process according to one or more of Claims 1 to 5, **characterized in that** in the first step, polyols (A1) are reacted with isocyanato-functional silanes (A2) in the presence of catalyst (B).

7. Process according to one or more of Claims 1 to 5, **characterized in that** in the first step, polyols (A1) are reacted with di- and/or polyisocyanates (A3) and also organyloxy-functional silanes (A4) containing amino groups in the presence of catalyst (B).

8. Compositions comprising
(A) organyloxysilyl-terminated polymers, preparable by reaction of at least one hydroxy-functional organic compound with at least one isocyanate-functional compound and also, optionally, a silane containing organyloxy groups, in the presence of at least one metal-containing catalyst (B),
and also
(U) at least one product of reaction of catalyst (B) and chelating agent (C).

9. Compositions according to Claim 8, **characterized in that** the polymers (A) comprise those of the formula
Y-[X-NR³-(CR¹₂)_{b}-SiRₐ(OR²)₃₋ₐ]ₓ (I)
where
Y is an x-valent polymer radical,
R may be identical or different and is a monovalent, optionally substituted, SiC-bonded hydrocarbon radical,
R¹ may be identical or different and is hydrogen atom or a monovalent, optionally substituted hydrocarbon radical which may be attached via nitrogen, phosphorus, oxygen, sulfur, or carbonyl group to the carbon atom,
R² may be identical or different and is hydrogen atom or a monovalent, optionally substituted hydrocarbon radical,
R³ may be identical or different and is hydrogen atom, a monovalent, optionally substituted hydrocarbon radical, or a group -CH(COOR⁴)-CH₂-COOR⁴,
R⁴ may be identical or different and is a monovalent, optionally substituted hydrocarbon radical,
X is a -NH-C(=O)- or -O-C(=O)- group,
x is an integer from 1 to 10,
a may be identical or different and is 0, 1 or 2, and
b may be identical or different and is an integer from 1 to 10.

## Revendications

1. Procédé pour la préparation de polymères terminés par organyloxysilyle (A), **caractérisé en ce que** dans une première étape
on transforme au moins un composé organique à fonctionnalité hydroxy avec au moins un composé à fonctionnalité isocyanate ainsi que le cas échéant un silane présentant des groupes organyloxy en présence d'au moins un catalyseur métallique (B) et
dans une deuxième étape
on additionne le mélange réactionnel ainsi obtenu d'un agent de formation d'un complexe de type chélate (C), qui est choisi parmi
(C1) les éthers couronnes
(C2) un composé présentant un hétérocycle, dont l'hétéroatome se trouvant dans le cycle dispose d'une paire d'électrons libres et qui contient au moins un autre hétéroatome présentant une paire d'électrons libres et
(C3) un composé contenant au moins deux groupes par molécule qui sont choisis parmi les groupes carboxyle, les groupes carboxylate, les groupes sulfate, les groupes sulfonate, les groupes phosphate, les groupes phosphonate, les groupes cyanure et les groupes cyanate.

2. Procédé selon la revendication 1, **caractérisé en ce qu'**il s'agit, pour les composés organiques à fonctionnalité hydroxy, de polyols (A1) de formule
Y-[OH]ₓ (V)
dans laquelle
Y signifie un radical polymère x-valent et
x représente un nombre entier de 1 à 10.

3. Procédé selon la revendication 1 ou 2, **caractérisé**
**en ce qu'**il s'agit, pour les composés à fonctionnalité isocyanate, de ceux choisis parmi les silanes à fonctionnalité isocyanato (A2) de formule
OCN-(CR¹2)_{b}-SiRₐ(OR²)₃₋ₐ (VI),
dans laquelle
R peut être identique ou différent et représente un radical hydrocarboné monovalent, le cas échéant substitué, lié par SiC,
R¹ peut être identique ou différent et représente un atome d'hydrogène ou un radical hydrocarboné monovalent, le cas échéant substitué, qui peut être lié à l'atome de carbone par l'intermédiaire d'azote, de phosphore, d'oxygène, de soufre ou d'un groupe carbonyle,
R² peut être identique ou différent et représente un atome d'hydrogène ou un radical hydrocarboné monovalent, le cas échéant substitué,
a peut être identique ou différent et vaut 0, 1 ou 2 et
b peut être identique ou différent et vaut un nombre entier de 1 à 10 et les diisocyanates et/ou les polyisocyanates (A3).

4. Procédé selon l'une ou plusieurs des revendications 1 à 3, **caractérisé**
**en ce qu'**il s'agit, pour l'agent de formation d'un complexe de type chélate (C), de composés (C3).

5. Procédé selon l'une ou plusieurs des revendications 1 à 4, **caractérisé en ce que** l'agent de formation d'un complexe de type chélate (C) est ajouté en une quantité telle qu'il en résulte un rapport molaire d'ions métalliques du composant (B) à agents de formation d'un complexe de type chélate (C) de 0,8 à 1000.

6. Procédé selon l'une ou plusieurs des revendications 1 à 5, **caractérisé**
**en ce qu'**on transforme, dans la première étape, des polyols (A1) avec des silanes à fonctionnalité isocyanato (A2) en présence du catalyseur (B).

7. Procédé selon l'une ou plusieurs des revendications 1 à 5, **caractérisé**
**en ce qu'**on transforme, dans la première étape, des polyols (A1) avec des diisocyanates et/ou des polyisocyanates (A3) ainsi que des silanes à fonctionnalité organyloxy, présentant des groupes amino (A4) en présence du catalyseur (B).

8. Compositions contenant
(A) des polymères terminés par organyloxysilyle, pouvant être préparés par transformation d'au moins un composé organique à fonctionnalité hydroxy avec au moins un composé à fonctionnalité isocyanate ainsi que le cas échéant un silane présentant des groupes organyloxy en présence d'au moins un catalyseur métallique (B) et
(U) au moins un produit de transformation du catalyseur (B) et de l'agent de formation d'un complexe de type chélate (C).

9. Compositions selon la revendication 8, **caractérisées**
**en ce qu'**il s'agit, pour les polymères (A), de ceux de formule
Y-[X-NR³-(CR¹₂)_{b}-SiRₐ(OR²)₃₋ₐ]ₓ (I)
où
Y signifie un radical polymère x-valent,
R peut être identique ou différent et représente un radical hydrocarboné monovalent, le cas échéant substitué, lié par SiC,
R¹ peut être identique ou différent et représente un atome d'hydrogène ou un radical hydrocarboné monovalent, le cas échéant substitué, qui peut être lié à l'atome de carbone par l'intermédiaire d'azote, de phosphore, d'oxygène, de soufre ou d'un groupe carbonyle,
R² peut être identique ou différent et représente un atome d'hydrogène ou un radical hydrocarboné monovalent, le cas échéant substitué,
R³ peut être identique ou différent et représente un atome d'hydrogène, un radical hydrocarboné monovalent, le cas échéant substitué, ou un groupe -CH(COOR⁴)-CH₂-COOR⁴,
R⁴ peut être identique ou différent et représente un radical hydrocarboné monovalent, le cas échéant substitué,
X représente un groupe -NH-C(=O)- ou -O-C(=O)-,
x vaut un nombre entier de 1 à 10,
a peut être identique ou différent et vaut 0, 1 ou 2 et
b peut être identique ou différent et vaut un nombre entier de 1 à 10.
